# EUROPEAN PATENT APPLICATION

(11) **EP 3 904 804 A1**
(43) Date of publication of application: **03.11.2021**
(21) Application number: 21166434.7
(22) Date of filing: 31.03.2021
(51) Int. Cl.: F26B 21/08, B01D 53/26, B01D 53/04

(54) **METHOD AND APPARATUS FOR MAINTENANCE OF SEPARATOR MEANS**

(30) Priority: 29.04.2020 IT 202000009463
(71) Applicant: Piovan S.P.A., 30036 Santa Maria di Sala (VE) (IT)
(72) Inventor: BELLIO, Enrico, 31050 Ponzano V.to (TV) (IT)
(74) Representative: Villanova, Massimo

(57) **Abstract**

A method for managing the maintenance of molecular sieve-type absorption separator means is disclosed, in which the separator means dehumidifies a gas during a process step and is regenerated during a regeneration step which includes a heating sub-step followed by a cooling sub-step, in which during the regeneration step the temperature of a regeneration gas leaving the separator means is measured, it is determined when the measured temperature reaches a memorized threshold temperature, and an anomaly status of the separator means is indicated if the measured temperature reaches the threshold temperature before a minimum heating time which has been memorized and previously determined in a step of characterization of the separator means.

## Description

The invention relates to a method and/or an apparatus for the maintenance of separator means, in particular for the maintenance of absorption separator means, for example separator means of the molecular sieve type.

Specifically, but not exclusively, the invention can be applied to separator means used to dehumidify a process fluid (for example air) used in a plant for the treatment of plastics in incoherent form, i.e. in form of granules and/or micro granules and/or powder and/or flakes or similar. This treatment plant may comprise, for example, at least one dehumidification and/or drying and/or crystallization and/or vacuum and/or pressure transport plant, etc. This treatment plant may be intended to feed a user, in particular a user configured to process and transform plastics, for example an extruder arranged to feed extruded plastics to at least one injection and/or blowing and/or compression molding machine.

It is known, in the plastics molding field, to use a plant for dehumidifying incoherent plastics (polymeric granules) before the plastics is fed to a user (for example an extruder that feeds an injection molding machine). The dehumidification plant uses a flow of a process fluid (for example ambient air) which, in a closed or open circuit, goes into direct contact with the plastics to extract the moisture therein.

To ensure correct dehumidification, the process fluid must exhibit certain peculiarities, in particular a certain dewpoint. For this purpose it is known to dehumidify the process fluid, in particular by using absorption separator means that retains at least a part of the moisture present in the process fluid. Said separator means may comprise, in particular, molecular sieves (for example zeolite or aluminosilicates), in which the molecular sieves are arranged inside at least one container (dehumidification tower) provided with at least one inlet and at least one outlet for the passage of the fluid to be dehumidified. Generally, known dehumidification systems include two or more dehumidification towers, to ensure greater stability of the dewpoint of the outgoing fluid.

During the dehumidification process, each dehumidification tower with molecular sieves works cyclically. Each cycle includes two steps, namely a process step, in which the molecular sieves absorb the moisture present in the process fluid, and a regeneration step, in which the moisture that was previously absorbed in the molecular sieves is extracted.

Generally, the regeneration step in turn includes two sub-steps. In a first sub-step (heating) the temperature of the molecular sieves is raised by means of a thermal flow (for example ambient air heated to 250÷300 °C), generally in an open circuit. In a second sub-step (cooling) the temperature of the molecular sieves is lowered, in order to avoid dangerous overheating in the process step of the next cycle.

The periodic changes between the process and regeneration steps, and between the heating and cooling sub-steps, generate expansions in the molecular sieves that can cause excessive mechanical stress, with consequent crushing and surface degradation, up to the risk of breakage of the molecular sieves. Generally, this unwanted situation is noticed too late, for example when an early, often sudden, decline in the performance of molecular sieves is detected, or through a visual inspection.

It is known to carry out maintenance of the dehumidification tower, generally by replacing the molecular sieves, or by compacting the bed of molecular sieves to ensure a high absorption capacity and an optimal distribution of the process fluid inside of bed.

A problem of the prior art is to ensure the effectiveness and adequacy of the maintenance performed. The compacting operation can be fundamental for the performance of the system, so it would be desirable to check whether the operation was actually carried out appropriately.

Another problem of the prior art is that of being able to control the reduction in the absorbing capacity of the molecular sieves due to their contamination. This phenomenon is frequent due to the tendency to use, in the treatment of plastics, ever higher percentages of recycled materials which, as known, contribute significantly to generate contaminants, which are not always eliminated in the regeneration step and which can occlude the pores of the molecular sieves preventing the fixing of water molecules. Indeed, it often happens that in the regeneration step the contaminants are released from a portion of the sieves and contaminate other portions, worsening the situation.

Another drawback is the high energy consumption in the regeneration step. Generally, the control of the regeneration step provides for a predetermined duration of time, the same for each cycle and determined a priori on the basis of the situation of maximum absorption efficiency of the separator means. However, since the absorption capacity of the separator means decreases over time, it happens that the thermal energy supplied with each regeneration becomes, cycle after cycle, more and more in excess than what is actually needed.

A solution is known which tries to detect the degradation of molecular sieves over time by monitoring the weight of the sieves themselves, in order to establish their degree of absorption over time. However, this solution is not very precise and reliable, since the weight measurement is not able to discriminate the degree of water absorption compared to other substances. Furthermore, the solution by weight is laborious and complicated since it must make use of preventive statistical formulations and requires an accurate analysis of the thermal profiles of the molecular sieves.

Patent publication US 5,546,673 discloses a method according to the preamble of claim 1.

### Summary of the invention

An object of the invention is to obviate one or more of the aforementioned limitations and drawbacks of the prior art.

An object of the invention is to detect in real time the condition of the separator means, in particular to perform maintenance thereof.

An advantage is to provide a method and/or an apparatus for monitoring, in a precise and reliable manner, the state of the separator means, in particular of absorption separator means, for example of the molecular sieve type.

An advantage is to establish in real time the absorption capacity of the separator means and/or the degradation of the separator means over time.

An advantage is to allow the ordinary maintenance of the separator means to be governed in advance, in a predictive manner.

An advantage is to reduce energy consumption, especially that required in the regeneration step of the separator means.

An advantage is to allow energy consumption in the regeneration step that is commensurate with the actual amount of water to be evaporated.

An advantage is to allow scheduling of the maintenance of the separator means based on actual need.

An advantage is to provide separator means for dehumidifying a process fluid, in which it is possible to manage the ordinary and/or extraordinary maintenance of the separator means in a deterministic way, with the possibility of predicting and organizing the time of maintenance in advance.

An advantage is to provide a method and/or an apparatus for the maintenance of separator means particularly suitable for the dehumidification of a process fluid used to process polymeric resins in incoherent state.

An advantage is to reduce the ordinary and/or extraordinary maintenance interventions of the separator means.

An advantage is to provide a constructively simple and economical apparatus for the maintenance of separator means, in particular separator means for dehumidifying a process fluid.

These objects and advantages, and more besides, are achieved by a method and/or an apparatus according to one or more of the below claims.

In one example, a method for controlling absorption separator means, in particular of the molecular sieve type, provides that after a process step in which the separator means dehumidifies a gas, there is a regeneration step which includes a sub-step of heating the separator means followed by a sub-step of cooling, in which during the regeneration step the temperature of a regeneration gas leaving the separator means is measured, it is determined when the measured temperature reaches a memorized threshold temperature, an anomaly status of the separator means is indicated if the measured temperature reaches the threshold temperature before a minimum heating time, where the minimum heating time had been determined in a previous characterization step of the separator means.

### Brief description of the drawings

The invention can be better understood and implemented with reference to the attached drawings which illustrate non-limiting examples of implementation, wherein:
Figure 1 schematically shows an example of a dehumidification apparatus with absorption separator means in a regeneration configuration made in accordance with the present invention;
Figure 2 shows an example of a curve of the temperature trend as a function of time during a regeneration step (heating sub-step) of the separator means of the apparatus of Figure 1;
Figure 3 shows a curve as in Figure 2 including also the cooling sub-step of the separator means;
Figures 4 and 5 show, respectively, an example of design data and an example of characterization data relating to a molecular sieve dehumidification tower used in the apparatus of Figure 1;
Figures 6 and 7 show flowcharts representative of maintenance logics of the separator means of the apparatus of Figure 1.

### Detailed description

With reference to the aforementioned figures, the reference numeral 1 generally indicates a dehumidification apparatus in a regeneration configuration.

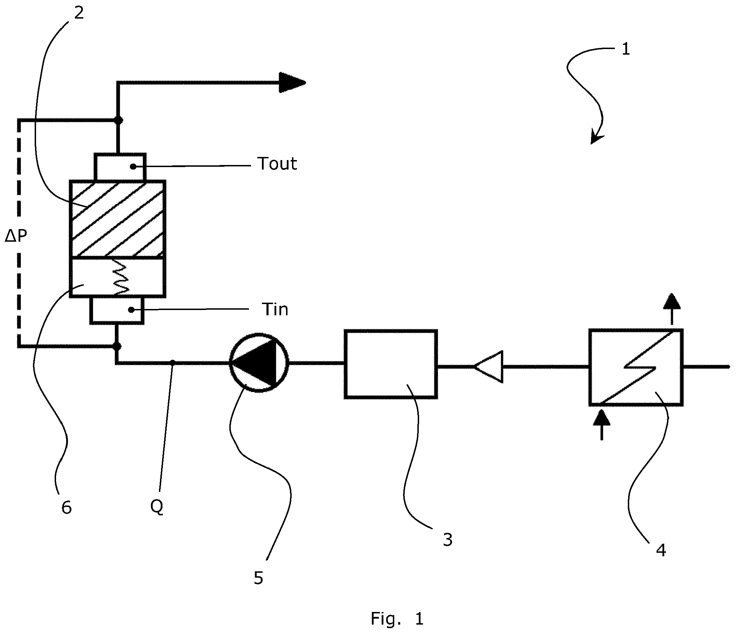

The dehumidification apparatus 1 may comprise, as in the illustrated specific example, separator means 2, in particular absorption separator means. The absorption separator means may comprise, in particular, separator means of the type with molecular sieves. The separator means 2 may be configured, in particular, to retain moisture from the process fluid. The separator means 2 may comprise, as in this specific example, at least one dehumidifier, or, as in other examples not illustrated, at least two dehumidifiers arranged in parallel and configured to alternate process steps (in which they absorb humidity from a process fluid) and regeneration steps (in which they release the moisture retained in the previous process step to a regeneration fluid). In particular, each dehumidifier may be of the type with molecular sieves (molecular sieve dehumidification tower). The separator means 2 is shown in Figure 1 during the regeneration step.

The dehumidification apparatus 1 may comprise, in particular, at least one filtration device 3 arranged to filter a (process and/or regeneration) flow and to feed the flow of the filtered fluid to the separator means 2. The filtration device 3 may comprise, in particular, at least one filter medium for purifying the fluid from solid particles in suspension. The filter medium may comprise, in particular, at least one filter of the cartridge type, or a flat or conical or other type of filter. The filter medium may be made, in particular, of a cellulose-based material (paper) and/or polyester and/or polypropylene and/or polyurethane and/or cotton and/or sponge and/or fiber made of glass and/or nonwoven fabric and/or metal mesh, etc.

The dehumidification apparatus 1 may comprise, in particular, at least one cooling device 4 configured to cool a flow and to feed the flow of the cooled fluid to the separator means 2, in particular during the cooling sub-step in the regeneration step. The cooling device 4 may comprise, in particular, at least one heat exchanger of the gas/liquid type which uses a refrigerated liquid (for example water) for cooling the flow of the regeneration fluid (gas).

The dehumidification apparatus 1 may comprise, in particular, fan means 5 configured to generate a flow of gas through the separator means 2 from an inlet side to an outlet side of the separator means 2. The fan means 5 may comprise, in particular, at least one device that is configured to displace gas streams and that is driven by at least one motor. The fan means 5 may comprise, in particular, at least one device provided with rotating blades. The fan means 5 may comprise, in particular, at least one fan. The fan means 5 may be arranged, in particular, downstream of the filtration device 3 (with reference to the direction of flow during filtration from a polluted side to a purified side). The fan means 5 may be arranged, in particular, upstream of the separator means 2 (with reference to the direction of flow from the inlet side to the outlet side). The fan means 5 may be arranged, in particular, between the filtering device 3 and the separator means 2, even if it is possible to provide other arrangements.

The dehumidification apparatus 1 may comprise, in particular, a heating device 6 configured to heat the fluid which is fed to the separator means 2. The heating device 6 may comprise, in particular, electrical resistance heating means, or otherwise.

The dehumidification apparatus 1 may comprise, in particular, temperature sensor means for measuring the temperature of the fluid upstream of the heating device 6 and before passing through the separator means 2 (inlet side). The dehumidification apparatus 1 may comprise, in particular, temperature sensor means for measuring the temperature of the fluid heated by the heating device 6 before passing through the separator means 2 (inlet side). The dehumidification apparatus 1 may comprise, in particular, temperature sensor means for measuring the temperature of the fluid after passing through the separator means 2 (outlet side).

The dehumidification apparatus 1 may comprise, in particular, pressure sensor means for measuring at least one pressure difference between the inlet and outlet side of the separator means 2. The pressure difference may be determined by measuring the pressure both on the outlet side and on the inlet side, by calculating the difference between the two measured pressures, upstream and downstream of the separator means 2. The pressure difference may be determined by measuring the pressure only on the outlet side, downstream of the separator means 2, considering the pressure on the inlet side known, upstream of the separator means 2, for example by considering it equal to a delivery pressure of the fan means 5. The pressure sensor means may comprise, in particular, at least one pressure transducer arranged on the outlet side of the separator means 2. The pressure sensor means may comprise, in particular, at least one pressure transducer arranged on the inlet side of the separator means 2.

The dehumidification apparatus 1 may comprise, in particular, flow sensor means arranged to measure at least one gas flow generated by the fan means 5 through the separator means 2. The flow sensor means may comprise, in particular, at least one flow meter (for example a mass and/or volumetric flow meter for gas). The flow sensor means may comprise, in particular, means for measuring the velocity of a gas flow. The flow sensor means may comprise, in particular, sensor means of a known type used to measure the flow of gas in a duct.

The dehumidification apparatus 1 may be configured (in a process configuration) to feed a dehumidified process fluid to at least one container (not shown) of incoherent plastics (polymeric granules). The process fluid may comprise a gas, for example air. The dehumidification apparatus 1 and the container may belong to a system for dehumidifying the incoherent plastics. The plastics container may comprise, in particular, at least one dehumidification hopper for resin granules. The dehumidification apparatus 1 may include, in particular, at least one inlet for a process fluid to be dehumidified and at least one outlet for the dehumidified process fluid. The inlet of the apparatus 1 may be connected, in particular, with at least one outlet of the container (hopper) where the incoherent plastics are processed (dehumidified or dried). The outlet of the apparatus 1 may be connected, in particular, with at least one inlet of the container (hopper) where the incoherent plastics are processed (dehumidified or dried). The process fluid circuit may be a closed circuit with inlet and outlet connected to the container, or an open circuit.

The dehumidification apparatus 1 may comprise, in particular, programmable electronic control means (for example an electronic processor) to govern the apparatus both in the process steps and in the regeneration steps.

The control means may be provided, in particular, with computer program instructions configured to perform a method for managing the ordinary and/or extraordinary maintenance of the separator means (molecular sieves of the dehumidification tower) in a deterministic manner, so as to foresee and plan in advance the performance of maintenance operations.

The method may comprise, in particular, the step of determining, for example on a statistical basis, at least one characterization of the separator means. In this specific example the separator means comprises absorption separator means. In particular, the separator means comprises dehumidification means of the molecular sieve type, for example at least one dehumidification tower.

The characterization may be performed, in particular, in laboratory. The empirical characterization may provide, in particular, to determine at least one temperature curve as a function of time of the separator means during the regeneration step (regeneration curve), in particular during the heating sub-step. The temperature of the separator means may be, in particular, the temperature of the process fluid measured at the outlet of the separator means. The regeneration curve for a type of dehumidification tower may be determined by tests carried out on two or more samples of separator means, in particular on a significant number (for example at least three) of samples of dehumidification tower.

During the heating sub-step, the energy transferred to the separator means (in particular to the molecular sieves) is mainly composed of two fractions (neglecting the thermal dispersions), namely a fraction relating to the heating of the mass of the separator means (molecular sieves), and a fraction relating to the evaporation of the water absorbed by the separator means.

The characterization may include, in particular, the determination of some parameters (boundary conditions), such as the temperature of the regeneration fluid (air) at the inlet of the separator means (upstream of the heating device) and/or the flow rate of the regeneration fluid and/or the mass of the separating means (mass of the molecular sieves), the degree of compaction of the separating means (molecular sieves) defined, in particular, on the basis of one or more parameters of a vibration compaction treatment (for example the vibration time and/or the vibration frequency), the position of the temperature reading points, pressure reading points and flow reading points, the initial and final humidity of the separator media (molecular sieves), etc.

The dehumidification apparatus 1 may comprise, in particular, humidity sensor means arranged to measure the humidity (absolute humidity and/or relative humidity and/or dewpoint and/or specific humidity) of the separator means, in particular for measuring the humidity of the fluid at the outlet of the separator means.

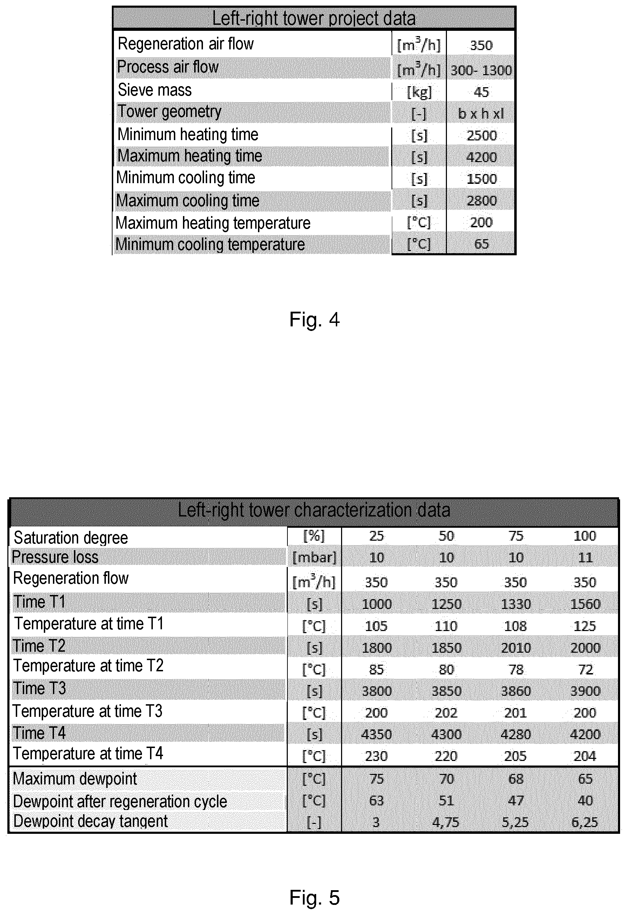

The table in Figure 4 shows an example of the design data of a molecular sieve tower, in particular intended for use in conjunction with another tower, alternating process steps and regeneration steps.

The design data may include, in particular, one or more of the following process parameters: minimum heating time Tminrisc, maximum heating time Tmaxrisc, minimum cooling time Tminraffr, maximum cooling time Tmaxraffr, maximum heating temperature tmax; minimum cooling temperature tmin.

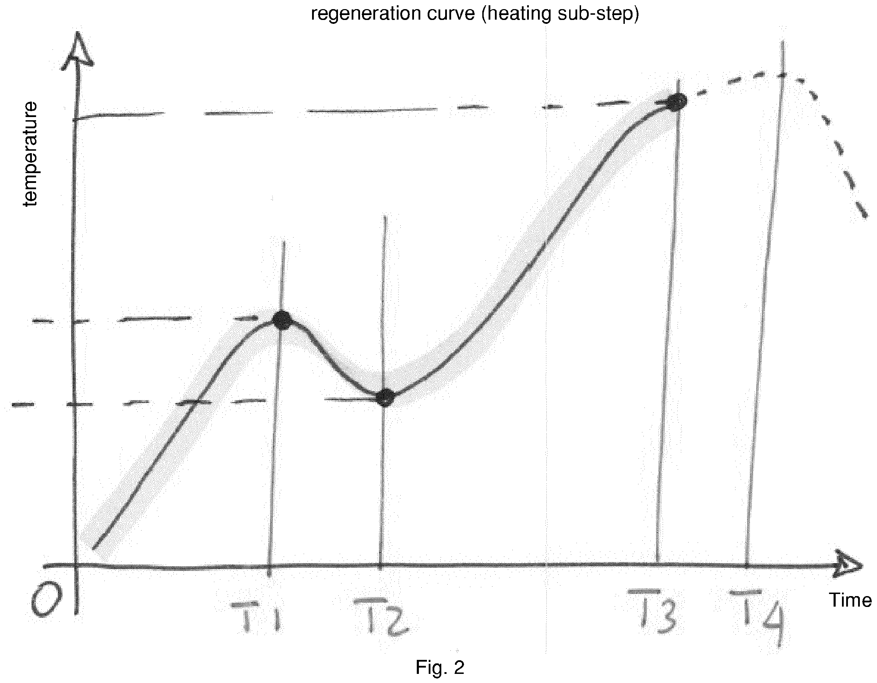

An example of a regeneration curve determined experimentally in the characterization step is shown in Figure 2. This curve may be distinguished, in particular, by at least four characteristic parts in time sequence.

In a first part (from time 0 to time T1), the measured temperature t of the regeneration fluid leaving the dehumidification tower increases. This first part is the heating period of the mass of the molecular sieves. This first part ends with a maximum of the curve at time T1.

In a second part (from time T1 to time T2), the measured temperature t of the regeneration fluid leaving the dehumidification tower does not increase, indeed it generally decreases. This second part is the period of rapid evaporation of the water trapped in the molecular sieves. The contribution of heat and its diffusion in the bed of the molecular sieves brings the water to the boiling point. This second part is a substantially endothermic process, i.e. with absorption of heat, which involves a lowering of the temperature measured in the regeneration fluid. At time T2 there is a minimum reached by the temperature curve in the evaporation period.

In a third part (from time T2 to time T3), the measured temperature t of the regeneration fluid leaving the dehumidification tower starts to rise again, due to the heat input. This third part starts with the minimum reached in the evaporation period and continues until the temperature of the regeneration fluid leaving the dehumidification tower reaches a predefined allowed maximum limit. This maximum limit determines the moment T3 at which heating ends, i.e. the heating device switches off.

In a fourth part (from time T3 to time T4), the measured temperature t of the regeneration fluid leaving the dehumidification tower continues to rise even after the heat input has been switched off, due to the thermal inertia of the system. At the moment T3, when the heating is turned off, the thermal inertia of the mass of the tower releases energy which leads to an increase in temperature up to a maximum that defines the time T4. This temperature increase due to thermal inertia can take place even if, after the moment T3, the cooling means have been activated. After the time T4 the temperature curve begins to descend.

After the transition from heating to cooling, the cold air, which enters the tower and passes through the molecular sieves, absorbs heat and therefore raises its temperature, resulting in the fourth part with increase of heat.

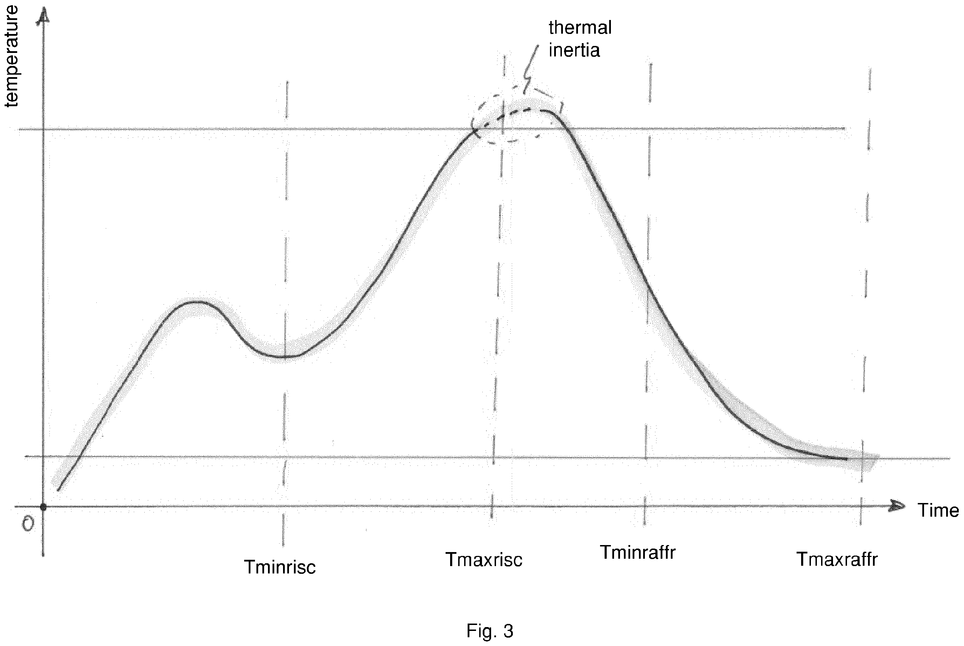

Figure 3 shows an example of a regeneration curve of the temperature t of the fluid at the outlet of the separator means 2 as a function of the time T during an actual regeneration step of the separator means 2 actually operating, a regeneration step following a process step (with moisture absorption).

It is observed, in particular, the presence of a fourth part which can provide information relating to the state of the molecular sieves, in particular relating to the saturation of the molecular sieves and their greater or lesser absorption capacity. This information may be obtained, in particular, from the duration of the fourth part (time T4) and/or from the value of the maximum temperature reached at time T4.

The cooling may provide, in particular, the use of a closed cooling circuit with a low temperature cooling fluid. In the regeneration curve, the cooling part following the time T4 (see in particular Figure 3) may be characterized by the value of the time taken to reach a predetermined temperature, or end-of-cooling temperature.

There is a control logic of the regeneration step which determines the passage between the heating sub-step and the cooling sub-step. The moment of this passage occurs at the time Tinv (inversion time).

The heating sub-step is characterized by at least three pre-established and memorized limits, namely two time limits and one temperature limit. The two time limits are a "minimum heating time" (Tminrisc), before which it is not possible to pass to the cooling sub-step, and a "maximum heating time" (Tmaxrisc), after which it is mandatory to pass to the cooling sub-step (i.e. the control means deactivates the heating means and activates the cooling means). The temperature limit is a "maximum regeneration temperature" (tmax), beyond which it is mandatory to pass to the cooling sub-step.

An analysis based on the aforementioned limits in the heating sub-step (predetermined limits in the experimental characterization step of the separator means) and on the temperatures and relative times measured in real time during the regeneration step, may provide useful information on the state of wear and/or degradation and/or contamination of the separator media (molecular sieves).

If the temperature t leaving the regeneration tower reaches the value of the "maximum regeneration temperature" (tmax) before the "minimum heating time" (Tminrisc) has elapsed, this means that the separator means 2 is degraded and it does not absorb heat, so that the heat supplied to the inlet of the separator means substantially reaches the outlet thereof.

If the temperature t leaving the regeneration tower reaches the value of the "maximum regeneration temperature" (tmax) before the "maximum heating time" (Tmaxrisc) expires, this means that the separator means 2 in the previous step process (with moisture absorption) had not been saturated up to the limit of their absorption capacity.

If, on the other hand, the temperature t leaving the regeneration tower has not reached the value of the "maximum regeneration temperature" (tmax) at the end of the "maximum heating time" (Tmaxrisc), this can mean at least one, two, three or four of the following situations (i) to (iv) (in any possible combination): (i) the flow rate of the fluid used for the regeneration is too low, (ii) the flow rate of the fluid used for the regeneration is too high so that the correct temperature is not reached at the inlet of the separator means 2 (tower), the temperature being measured after the heating device 6, (iii) the thermal power supplied by the heating means is too low, (iv) the system has energy losses.

The cooling sub-step is characterized by at least three pre-established and memorized limits, namely two time limits and one temperature limit. The two time limits are a "minimum cooling time" (Tminraffr), before which it is not possible to interrupt the regeneration (in particular to start a new cycle with a process step), and a "maximum cooling time" (Tmaxraffr), after which it is mandatory to interrupt the regeneration (in particular to start a new cycle with a process step).

The temperature limit is a "minimum regeneration temperature" (tmin), below which it is mandatory to interrupt the regeneration (in particular to start a new cycle with a process step).

In some embodiments it is possible that, under certain conditions (in particular when the method provides for the dewpoint control of the process fluid), the control means is configured in such a way that, even if the "maximum time of cooling" (Tmaxraffr, that is the period of time after which it is mandatory to interrupt the regeneration), but the dewpoint value of the process fluid has not yet reached a desired value, it is not expected to immediately activate the actual step change, that is the start of a new process step (dehumidification after regeneration), but it is envisaged to control a step (which may be defined as "static step" or "waiting step" of the newly regenerated separator means) in which the control devices wait until the dewpoint has reached a certain value, after which, once the desired dewpoint has been reached, the control means commands the actual step change after regeneration and the start of the new process step (dehumidification).

An analysis based on the aforementioned limits in the cooling sub-step (predetermined in the step of experimental characterization of the separator means) and on the temperatures measured in real time during regeneration, may provide useful information on the state of wear and/or degradation and/or contamination of the separator media (molecular sieves).

This cooling sub-step may include, in specific examples, the use of a cooling system with air recirculation.

In particular, if the temperature t leaving the regeneration tower reaches the value of the "minimum regeneration temperature" (tmin) before the "minimum cooling time" (Tminraffr) expires, this can mean, in particular, that the separator means 2 is deteriorated and no longer have an effective energy absorption capacity.

If the temperature t leaving the regeneration tower reaches the value of the "minimum regeneration temperature" (tmin) before the expiry of the "maximum cooling time" (Tmaxraffr), this can mean at least one of the following situations: (i) the flow rate of the fluid used in the regeneration is too high, (ii) the system has energy losses.

If, on the other hand, the temperature t leaving the regeneration tower has not reached the value of the "minimum regeneration temperature" (tmin) at the end of the "maximum cooling time" (Tmaxraffr), this can mean at least one, two or three of the following situations: (i) the flow rate of the fluid used in the regeneration is too low and does not guarantee the removal of heat, (ii) the cooling power provided by the cooling means is too low, (iii) the separator means (molecular sieves) are polluted and/or contaminated by substances that reduce their absorbing efficiency (contaminants).

Figure 4 shows an indicative and non-limiting example of a characterization table of a molecular sieve dehumidification tower used for the dehumidification of plastic resins.

Figure 5 shows an example, indicative and not limiting, of a characterization table of a molecular sieve dehumidification tower used for the dehumidification of plastic resins, in which the characterization values are used to establish the humidity absorption efficiency. The table in Figure 5 describes the behavior of a dehumidification tower when the degree of saturation (or absorption load) varies from a minimum value (25%) to a maximum value (100%), where the saturation values are expressed in percentage with respect to the total mass of the molecular sieves present in the dehumidification tower.

The characterization table of Figure 5 may be used as a reference for checking the state of the separator means, in particular the situation of use and/or degradation and/or saturation and/or contamination of the separator means (molecular sieves) during the normal work of absorption, with process and regeneration cycles. This control allows to establish the state of wear of the separator means and therefore to signal in advance the moment of replacement and/or to plan maintenance in a predictive manner.

It is possible to determine the state of the separator means (degradation and/or wear and/or contamination of the molecular sieves) based on the monitoring of the dewpoint, in particular the dewpoint of the fluid at the outlet of the separator means. In particular, the comparison between the values detected over time of the dewpoint tangent may provide useful information on the status of the separator means, for example the absence of changes in the dewpoint tangent after two or more regeneration cycles could indicate an anomaly state of the separator means, or of the dehumidification apparatus.

It is possible, in particular, to establish a maximum value of the dewpoint of the regeneration fluid (air) at the outlet of the separator means, which is characteristic of the separator means in use (maximum dewpoint values in Figure 5). The separator means may be characterized, for example, so that the measured dewpoint value is related to the aforementioned maximum dewpoint value (for example as a percentage) and that the ratio thus determined is associated with a certain ratio (for example as a percentage) of degradation or saturation of the separator means, this ratio being with respect to a condition of maximum degradation or saturation. By way of example only, a measured dewpoint equal to 60% of the maximum dewpoint value could correspond to a situation in which the saturation ratio is 25% with respect to the condition of maximum saturation, considered equal to 100%.

An example of an algorithm for determining the degradation state of the separator means may comprise the steps of measuring and storing in real time the values of some process parameters during the regeneration step to then process these values and predictively establish the state of wear of the separator means.

The algorithm may comprise the step of reading and storing the temperature t of the regeneration fluid leaving the separator means and constructing a curve of the temperature t as a function of time T. The algorithm may comprise the step of determining in more points the tangent of the temperature curve t as a function of time T. The algorithm may include, in particular, the step of determining the actual times T1', T2', T3', T4' of the temperature curve t as a function of time T.

The algorithm may comprise the step of reading and storing the dewpoint dp of the regeneration fluid leaving the separator means and constructing a curve of the dewpoint dp as a function of time T. The algorithm may comprise the step of determining in more points the tangent of the curve of the dewpoint dp as a function of time T. The algorithm may include the step of reading and storing the values of the dewpoint dp and of the tangent of the curve of the dewpoint dp at the instants T1', T2', T3', T4'.

In particular, it is possible to determine a first current time T1' on the basis of the moment in which, during the initial heating period of the current regeneration step, the current temperature t as a function of time T reaches a local maximum, and a second current time T2' on the basis of the moment in which, during the heating period of the current regeneration step, the current temperature t as a function of time T, after having reached the aforementioned local maximum, reaches a local minimum and then rises again. It is therefore possible to compare the first current time T1' and the second current time T2' with the related characterization data T1 and T2 and determine the status of the separation means 2 based on this comparison. The same may be achieved with the real times T3' and T4' and the stored times of characterization T3 and T4.

The algorithm may comprise the step of reading and storing the flow rate Q of the regeneration fluid (regeneration flow rate) that passes through the separator means during the regeneration step. The algorithm may include the step of determining and storing the pressure difference ΔP (pressure drop) between the inlet and outlet of the separator means during the regeneration step.

The algorithm may comprise the step of comparing the real value of the time T1' with the corresponding reference value of the time T1 of the characterization table (for example the table in Figure 5) and/or comparing the real value of the time T2' with the corresponding reference value of time T2 and/or compare the real value of time T3' with the corresponding reference value of time T3 and/or compare the real value of time T4' with the corresponding reference value of time T4 of the characterization table, and to obtain information on the state of the separator means on the basis of the aforementioned comparison.

The algorithm may comprise the step of comparing the measured value of one or more of the temperatures t at the current time T1', T2', T3', T4' with the corresponding values of the predefined temperatures t at the reference time T1, T2, T3, T4 of the characterization table (for example the table of Figure 5), and to obtain information on the state of the separator means on the basis of the above comparison.

The algorithm may include the step of comparing the dewpoint value dp of the regeneration fluid measured at the end of a regeneration cycle with the dewpoint reference values of the characterization table (for example the table in Figure 5). The algorithm may include the step of comparing the value of the tangent of the dewpoint tangdp curve at the end of the regeneration cycle with the reference values of the dewpoint decay tangent of the characterization table (for example the table in Figure 5). It is possible to obtain information on the state of the separator means based on one or more of the aforementioned comparisons.

The algorithm may comprise the step of comparing the value of the time T4' with the time Tinv that is the time in which the thermal inversion actually takes place during a regeneration step, i.e. the end of the heating and/or the beginning of the cooling sub-step. The time Tinv may be, as mentioned, either the moment in which the temperature t reaches the value tmax, or Tinv = Tmaxrisc if at the time Tmaxrisc the temperature t has not yet reached the value tmax.

If the controller interrupts the heating at the time Tmaxheat, that is Tinv = Tmaxheat, it means that the temperature t has not reached the temperature value tmax, (time-controlled thermal interruption or inversion).

If the controller stops heating before the Tmaxrisc time, that is Tinv < Tmaxrisc, it means that the interruption was commanded when the predefined temperature tmax was reached (interruption or thermal inversion controlled by the temperature).

The controller determines when the maximum point of the temperature curve t is reached as a function of time T, so as to determine the time T4'.

The control algorithm may comprise the step of reading and storing the dewpoint dp at the outlet of the separator means during the heating sub-step of the regeneration step at each cycle of the algorithm and of calculating and storing the tangent of the dewpoint tangdp during the heating sub-step at each regeneration cycle. The control algorithm may include the step of verifying if the tangdp values vary during the heating sub-step and, if not (no tangdp variation), of reporting an anomalous situation and/or calculating an expected reduction in the average life of the separator means (for example calculate NRM = NRM - ΔNRM, where NRM is the maximum number of regeneration cycles allowed before replacing the separator means, and ΔNRM is a subtraction value, for example expressed as a percentage with respect to NRM, or expressed by a fixed number or by a variable number).

The control algorithm may include the step of signaling the need for replacement of the separator means when the number of regeneration cycles actually performed has reached the NRM value.

The control algorithm may comprise the step of reading and storing the temperature t at the output of the separator means during the heating sub-step of the regeneration step at each cycle of the algorithm and of calculating and storing the tangent of the temperature tangt during the heating sub-step at each regeneration cycle. The control algorithm may include the step of verifying if the tangt values vary during the heating sub-step and, if not (no tangt variation), of reporting an anomalous situation and/or calculating an expected reduction of the average life of the separator means (for example calculate NRM = NRM - ΔNRM).

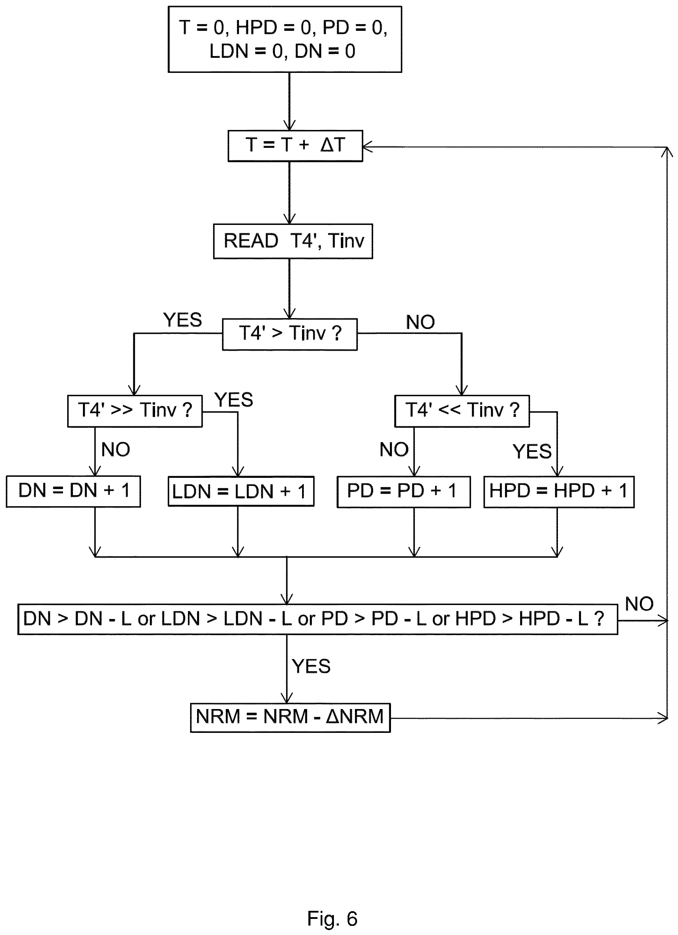

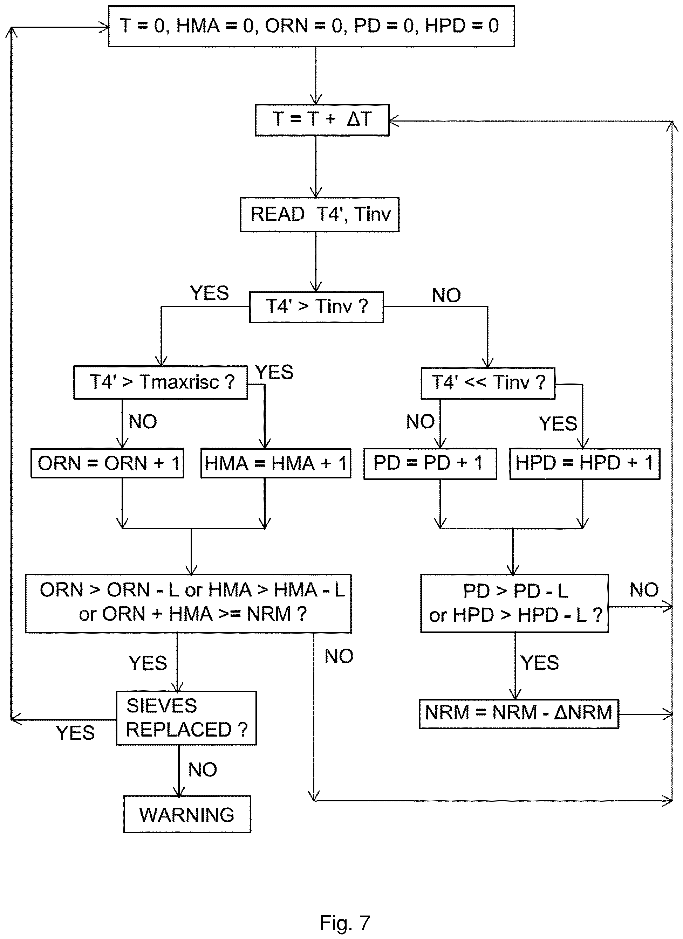

Figures 6 and 7 show two algorithms of a logic that can be implemented on the electronic control means for managing the maintenance of the separator means 2. The two algorithms may be used individually or even in combination with each other in a wider management logic. Furthermore, the algorithms exemplified in Figures 6 and 7 may be used in combination with the management logics described above.

### Legend:

T = time counter;
T4' = real time in which the maximum temperature during the regeneration step is measured;
Tinv = real time in which the reversal from the heating sub-step to the cooling sub-step occurs during the regeneration step;
Tmaxrisc = predefined threshold of maximum heating time;
PD = counter of the number of regeneration steps in which Tinv > T4';
HPD = counter of the number of regeneration steps in which Tinv >> T4';
DN = counter of the number of regeneration steps in which Tinv < T4';
HDN = counter of the number of regeneration steps in which Tinv << T4';
HMA = counter of the number of regeneration steps in which T4' > Tmaxrisc (over-absorption, the separator means over-absorbed moisture);
ORN = counter of the number of regeneration steps in which T4' <= Tmaxrisc (over-regeneration, the separator means has been over-regenerated);
NRM = maximum number of regeneration steps allowed before replacing the separator means;
Δ NRM = value of reduction of the life of the separator means;
PD-L = maximum regeneration limit with Tinv > T4';
HPD-L = maximum limit of regeneration steps with Tinv >> T4';
DN-L = maximum limit of regeneration steps with Tinv < T4';
HDN-L = maximum limit of regeneration steps with Tinv << T4';
HMA-L = maximum limit of regeneration steps with T4' > Tmaxrisc;
ORN-L = maximum limit of regeneration steps with T4' <= Tmaxrisc.

The Tmaxrisc time may be stored in the characterization table. The meaning of ">>" (much greater) may be, for example, that Tinv is much greater than T4' if Tinv - T4' is greater than a predetermined and stored ΔT1 value. The meaning of "<<" (much smaller) may be, for example, that Tinv is much less than T4' if Tinv - T4' is less than a pre-established and stored -ΔT2 value.

If Tinv >> T4', (Tinv - T4' greater than ΔT1), then it means that too much thermal energy has been supplied for regeneration. If Tinv > T4', (Tinv - T4' greater than zero and less than ΔT1), then it means that sufficient thermal energy has been supplied for regeneration. If Tinv < T4' (Tinv - T4' less than zero and greater than -ΔT2), then it means that less thermal energy has been supplied than that required for regeneration. If Tinv << T4', (Tinv - T4' less than -ΔT2), then it means that much less thermal energy has been supplied than that required for regeneration.

## Claims

1. Method for management of separating means, comprising the steps of:
- providing absorption separating means (2), in particular molecular sieves absorption separating means;
- dehumidifying a process gas by the separating means (2);
- after the dehumidifying step, regenerating the separating means (2) with at least one heating sub-step and a subsequent cooling sub-step, wherein the heating sub-step comprises the passage of a flow of heating regeneration gas through the separating means (2) and the cooling sub-step comprises the passage of a flow of cooling gas through the separating means (2);
**characterized by** comprising the steps of:
- storing characterization data of the separating means (2), said characterization data including at least one value of at least one process parameter of a gas leaving the separating means (2);
- measuring at least one actual value of the process parameter of the gas leaving the separating means (2);
- comparing the measured value with the stored value to determine an actual condition of the separating means.

2. Method according to claim 1, comprising the steps of:
- during the regenerating step, measuring a temperature (t) indicative of the temperature of the separating means (2), in particular the temperature (t) of a gas leaving the separating means (2);
- during the regenerating step, determining when the measured temperature (t) reaches a predetermined maximum temperature (tmax);
- indicating an anomalous state of the separating means (2) if the measured temperature (t) reaches the maximum temperature (tmax) before a predetermined minimum heating time (Tminrisc).

3. Method according to claim 1 or 2, wherein said characterization data include two or more process parameter values detected during characterization in different saturation conditions of the separating means (2).

4. Method according to any one of the preceding claims, wherein said process parameter comprises the gas dewpoint.

5. Method according to any one of the preceding claims, wherein said process parameter comprises the gas temperature.

6. Method according to any one of the preceding claims, wherein said process parameter comprises the time at which the gas temperature reaches a local maximum point.

7. Method according to any one of the preceding claims, wherein said process parameter comprises the tangent of the dewpoint curve of the gas leaving the separating means (2) as a function of time.

8. Method according to any one of the preceding claims, wherein said process parameter comprises a first time (T1) that indicates the moment when, during an initial period of the heating sub-step in which the mass of the separating means (2) is heated, the temperature curve (t) as a function of time (T) reaches an initial local maximum point.

9. Method according to any one of the preceding claims, wherein said process parameter comprises a second time (T2) that indicates the moment when the temperature curve (t) as a function of time (T), after reaching an initial local maximum point and having started a phenomenon of endothermic evaporation, reaches a local minimum point and then goes up again.

10. Method according to any one of the preceding claims, wherein said process parameter comprises: a first local maximum point of the temperature during an initial period of the heating sub-step, and/or a local minimum point of the temperature reached during the heating sub-step, and/or a second local maximum point of the temperature reached after reaching a local minimum point, and/or a third period of time (T3) indicating the moment when the temperature (t) reaches a predetermined maximum value (tmax), and/or a fourth period of time (T4) indicating the moment when the temperature (t) reaches a second local maximum point.

11. Method according to any one of the preceding claims, comprising the steps of storing characterization data of the separating means (2) which include dewpoint values in different conditions of the separating means, measuring at least one dewpoint value of the regenerating gas leaving the separating means (2), comparing the measured dewpoint value with the characterization data to determine an actual condition of the separating means.

12. Method according to any one of the preceding claims, wherein, during the cooling sub-step:
- if the temperature (t) of the cooling gas leaving the separating means (2) reaches a predetermined value before the expiry of a minimum cooling time (Tminraffr), a specific situation is signaled, in particular relating to the separating means, for example a deterioration of the separating means; and/or
- if the temperature (t) of the cooling gas leaving the separating means (2) reaches a predetermined value before the expiry of a maximum cooling time (Tmaxraffr), a specific situation is signaled, in particular relating to regeneration efficiency, for example excessive consumption of regeneration energy; and/or
- if the temperature (t) of the cooling gas leaving the separating means (2) has not reached a predetermined value at the end of a maximum cooling time (Tmaxraffr), a specific situation is signaled, in particular relating to a regeneration anomaly, for example an excessive thermal intensity of the heating gas and/or a poor cooling intensity of the cooling gas and/or an excessive quantity of contaminants in the separating means.

13. Method according to any one of the preceding claims, comprising the step of interrupting the heating sub-step at an inversion time (Tinv), wherein the inversion time (Tinv) is equal to a predetermined maximum heating time (Tmaxrisc) if the measured temperature (t) has not yet reached the maximum temperature (tmax) after the maximum heating time (Tmaxrisc), otherwise the inversion time (Tinv) is equal to the time when the measured temperature (t) reaches the maximum temperature (tmax); said method comprising, in particular, the step of comparing the inversion time (Tinv) with the time (T4') which indicates the moment in which during the regeneration step the temperature of the gas leaving the separating means (2) reaches a local maximum point.

14. Separating apparatus, comprising:
- absorption separating means (2), in particular molecular sieve absorption separating means;
- means for generating a flow of a process gas through said separating means (2) for dehumidifying the process gas;
- means for generating a flow of a heated regeneration gas through said separating means (2) for removing moisture;
- means for generating a flow of a cooling gas through said separating means (2) for cooling the latter;
- temperature sensor means for detecting the temperature (t) of gas leaving said separating means (2);
- control means configured to control a regeneration step with a heating period followed by a cooling period, passing a flow of heated regeneration gas through said separating means (2) during said heating period, storing characterization data of the separating means (2), said characterization data including at least one value of at least one process parameter of a gas leaving the separating means (2), measuring at least one actual value of the process parameter of the gas leaving the separating means (2), comparing the measured value with the stored value to determine an actual condition of the separating means.

15. Apparatus according to claim 14, wherein said control means comprise computer program instructions configured to perform a method according to any one of claims 2 to 13.
